# DEMANDE DE BREVET EUROPEEN

(11) **EP 4 447 292 A2**
(43) Date de publication de la demande: **16.10.2024**
(21) Numéro de dépôt: 24196839.5
(22) Date de dépôt: 29.03.2016
(51) Int. Cl.: H02K 9/197

(54) **ENSEMBLE COMPORTANT UNE MACHINE ÉLECTRIQUE TOURNANTE POSITIONNÉE A L'INTÉRIEUR D'UNE ENCEINTE**

(30) Priorité: 02.04.2015 FR 1552844
(62) Demande divisionnaire de: 16717181.8
(71) Demandeur: Valeo Electrification, 95892 Cergy Pontoise (FR)
(72) Inventeur: BOUARROUDJ, Lilya, 94046 CRETEIL CEDEX (FR); LABROSSE, Jean-Claude, 94046 CRETEIL CEDEX (FR); SEIDENBINDER, Régis, 94046 CRETEIL CEDEX (FR)
(74) Mandataire: Valeo Powertrain Systems

(57) **Abrégé**

L'invention porte principalement sur un ensemble, notamment pour véhicule hybride, caractérisé en ce que ledit ensemble comporte:
- une enceinte (46) pouvant accueillir un liquide de refroidissement et comportant une ouverture (49) pour faire communiquer l'intérieur de ladite enceinte (46) avec l'extérieur de ladite enceinte (46),
- une machine électrique tournante (10) disposée dans ladite enceinte (46) apte à être refroidie par ledit liquide de refroidissement,
- un élément de connecteur (51) électrique agencé pour être connecté électriquement à ladite machine électrique tournante (10),
- ledit élément de connecteur (51) étant monté dans ladite ouverture (49) de ladite enceinte (46) de manière étanche, de sorte que ledit élément de connecteur (51) participe à l'étanchéité permettant d'empêcher du liquide de s'écouler de l'intérieur de ladite enceinte (46) vers l'extérieur de ladite enceinte (46) par ladite ouverture (49).

## Description

La présente invention porte sur un ensemble comportant une machine électrique tournante positionnée à l'intérieur d'une enceinte remplie au moins en partie d'un liquide. L'invention trouve une application particulièrement avantageuse, mais non exclusive, avec les machines électriques réversibles de forte puissance pouvant fonctionner en mode alternateur et en mode moteur accouplées avec une boîte de vitesses.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électrique de commande.

Dans certains types de chaînes de traction de véhicule automobile assurant la transmission de la puissance mécanique du moteur thermique vers les roues du véhicule, une machine électrique tournante réversible de forte puissance est accouplée à la boîte de vitesses du véhicule. La machine électrique est alors apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique.

L'invention vise à proposer un ensemble compact dans lequel la machine électrique est située à l'intérieur d'une enceinte constituée par le carter de la boîte de vitesses remplie au moins en partie de liquide, tandis que le module électrique de commande est situé à l'extérieur de l'enceinte. En particulier, l'invention vise à proposer une configuration évitant les problèmes d'étanchéité au niveau de la connexion électrique entre ces deux éléments.

A cet effet, l'invention a pour objet un ensemble, notamment pour véhicule hybride, caractérisé en ce que ledit ensemble comporte:
- une enceinte pouvant accueillir un liquide de refroidissement et comportant une ouverture pour faire communiquer l'intérieur de ladite enceinte avec l'extérieur de ladite enceinte,
- une machine électrique tournante disposée dans ladite enceinte apte à être refroidie par ledit liquide de refroidissement,
- un élément de connecteur électrique agencé pour être connecté électriquement à ladite machine électrique tournante,
- ledit élément de connecteur étant monté dans ladite ouverture de ladite enceinte de manière étanche de sorte que ledit élément de connecteur participe à l'étanchéité permettant d'empêcher du liquide de s'écouler de l'intérieur de ladite enceinte vers l'extérieur de ladite enceinte par ladite ouverture.

L'invention permet ainsi de garantir l'étanchéité de l'ensemble du fait du positionnement du connecteur qui obture au moins en partie l'ouverture ménagée dans l'enceinte. En outre, l'élément de connecteur permet la connexion avec le module électrique de commande positionné à l'extérieur de l'enceinte.

Selon une réalisation, ledit élément de connecteur comporte au moins un joint pour empêcher du liquide de s'écouler de l'intérieur de ladite enceinte vers l'extérieur de ladite enceinte par ladite ouverture.

Selon une réalisation, ledit élément de connecteur comporte un joint intérieur, notamment annulaire, formant ledit joint, ledit joint intérieur étant agencé pour empêcher du liquide de s'écouler de l'intérieur de ladite enceinte vers l'extérieur de ladite enceinte par ladite ouverture.

Selon une réalisation, ledit joint intérieur est en appui contre une face d'appui notamment intérieure de ladite enceinte.

Selon une réalisation, ledit élément de connecteur comporte un épaulement sur lequel est en appui ledit joint intérieur en sorte que ledit joint intérieur est écrasé entre ladite face d'appui de ladite enceinte et ledit épaulement.

Selon une réalisation, ledit épaulement est situé à l'intérieur de l'enceinte.

Selon une réalisation, ledit épaulement est situé à l'extérieur de la machine électrique tournante.

Le joint intérieur peut être situé à l'extérieur de la machine électrique tournante.

Selon une réalisation, ledit joint intérieur est situé à l'intérieur de ladite enceinte.

Selon une réalisation, ledit joint intérieur fait le tour de ladite ouverture.

Selon une réalisation, ledit élément de connecteur comporte une pluralité d'orifices de passage pour des bornes électriques.

Selon une réalisation, lesdits orifices de passage reçoivent des joints pour empêcher du liquide de s'écouler de l'intérieur de ladite enceinte vers l'extérieur de ladite enceinte par ladite ouverture.

Selon une réalisation, lesdits joints sont disposés autour des bornes électriques, notamment à l'extérieur de l'enceinte.

Selon une réalisation, lesdits joints sont disposés sur une paroi externe de l'élément de connecteur.

En variante, lesdits joints peuvent être disposés sur une paroi interne de l'élément de connecteur.

Selon une réalisation, l'élément de connecteur comprend au moins une gorge entourant la borne électrique, la gorge étant agencée pour recevoir le joint disposé autour de la borne électrique correspondante.

Selon une réalisation, ledit élément de connecteur comporte un joint externe apte à empêcher des impuretés de s'écouler de l'extérieur de ladite enceinte vers ledit élément de connecteur, lorsque ledit élément de connecteur coopère avec un élément de connecteur complémentaire.

Selon une réalisation, ledit ensemble comporte un module électrique de commande comportant un élément de connecteur complémentaire destiné à être connecté électriquement audit élément de connecteur.

Le module électrique de commande peut comporter un onduleur.

Le module électrique de commande peut être refroidi par un liquide de refroidissement d'un type distinct du type du liquide de refroidissement circulant dans l'enceinte pour le refroidissement de la machine électrique tournante.

Le liquide de refroidissement circulant dans l'enceinte peut comporter une huile.

Le liquide de refroidissement du module électrique de commande peut comporter de l'eau.

Selon une réalisation, ledit élément de connecteur est de type mâle et ledit élément de connecteur complémentaire est de type femelle.

Selon une réalisation, les orifices de passage sont agencés pour permettre le passage de bornes électriques aptes à véhiculer des signaux de commande et de bornes électriques aptes à véhiculer des signaux de puissance.

Selon une réalisation, un joint notamment torique est disposé autour des bornes électriques aptes à véhiculer des signaux de puissance, lesdits joints étant notamment disposés sur une paroi de l'élément de connecteur située du côté duquel s'étendent les bornes électriques.

Au moins une partie des orifices de passage peuvent être réalisés directement dans ledit élément de connecteur.

Au moins une partie des orifices de passage peuvent être en outre réalisés dans un sous-connecteur rapporté.

Selon une réalisation, ledit élément de connecteur comporte une base munie de traces agencées pour permettre le contact électrique entre des bornes électriques dudit élément de connecteur et des sorties de phase de ladite machine électrique tournante.

Selon une réalisation, ladite base se situe autour dudit épaulement.

Selon une réalisation, ladite base est surmoulée sur lesdites traces, en sorte que lesdites traces sont noyées dans la masse, notamment plastique, dudit élément de connecteur.

Selon une réalisation, lesdites traces s'étendent dans un plan perpendiculaire à l'orientation desdites bornes électriques.

Selon une réalisation, ladite base et lesdites traces se situent à l'intérieur de ladite enceinte.

Selon une réalisation, les bornes électriques aptes à véhiculer des signaux de puissance ont une section circulaire.

En variante, les bornes électriques aptes à véhiculer des signaux de puissance peuvent avoir une section rectangulaire.

Selon une réalisation, les bornes électriques aptes à véhiculer les signaux de commandes sont entourées par les bornes électriques aptes à véhiculer les signaux de puissance.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'une machine électrique tournante utilisée dans l'ensemble selon la présente invention;
La figure 2 est une vue en coupe longitudinale partielle d'un ensemble selon la présente invention comportant une machine électrique tournante positionnée à l'intérieur d'une enceinte constituée par un carter de la boîte de vitesses et connectée électriquement à son module électrique de commande positionné à l'extérieur de l'enceinte;
La figure 3 est une vue en perspective illustrant un élément de connecteur mâle monté sur la machine électrique et un élément de connecteur femelle correspondant monté sur le module électrique de commande;
La figure 4 est une vue en perspective illustrant un deuxième mode de réalisation préférentiel de l'élément de connecteur mâle selon la présente invention destiné à être monté sur le carter de la machine électrique;
La figure 5 est une vue en coupe d'un sous-connecteur intégré à l'élément de connecteur de la figure 4.

Les éléments identiques, similaires, ou analogues conservent la même référence d'une figure à l'autre.

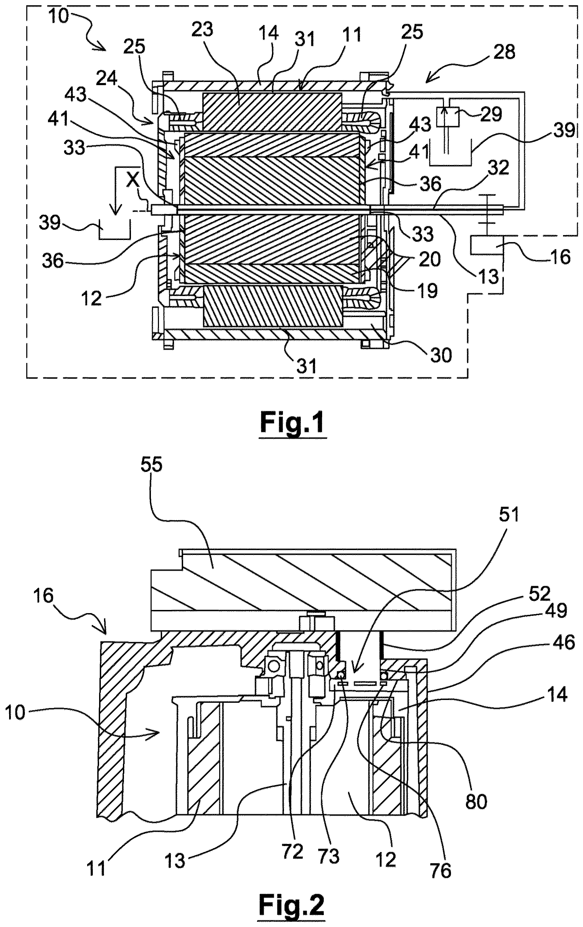

La figure 1 montre une machine électrique tournante 10 comportant un stator 11 polyphasé entourant un rotor 12 d'axe X monté sur un arbre 13. Le stator 11 est porté par un carter 14 configuré pour porter à rotation l'arbre 13 via des roulements. Le stator 11 de la machine 10 entoure le rotor 12 avec présence d'un entrefer entre la périphérie interne du stator 11 et la périphérie externe du rotor 12.

Cette machine électrique 10 est destinée à être accouplée à une boîte de vitesses 16 appartenant à une chaîne de traction de véhicule automobile. La machine 10 est alors apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine 10 pourra être comprise entre 18kW et 50kW.

Plus précisément, le rotor 12 comporte un corps 19 sous la forme d'un paquet de tôles. Des aimants permanents 20 sont implantés dans des ouvertures du corps 19. Les aimants 20 pourront être en terre rare ou en ferrite selon les applications et la puissance recherchée de la machine 10. Alternativement, les pôles du rotor 12 pourront être formés par des bobines.

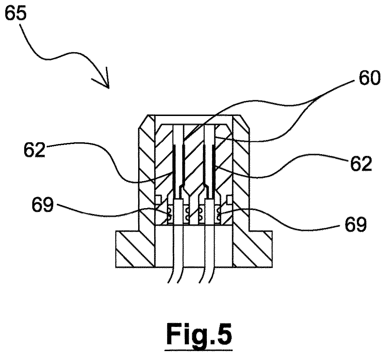

Par ailleurs, le stator 11 comporte un corps 23 en forme de paquet de tôles doté d'encoches, par exemple du type semi-fermées, équipées d'isolant d'encoches pour le montage du bobinage 24 du stator 11. Le bobinage 24 comporte un ensemble d'enroulements de phase traversant les encoches du corps 23 du stator 11 et formant des chignons 25 s'étendant en saillie de part et d'autre du corps 23 du stator 11. Les enroulements de phase sont obtenus ici à partir d'éléments conducteurs en forme d'épingles reliées entre elles par exemple par soudage. Ces enroulements sont par exemple des enroulements triphasés connectés en étoile ou en triangle. Les sorties des enrouements de phase sont reliées à un module électrique de commande 55 visibles sur les figures 2 et 5.

La machine électrique 10 est refroidie au moyen d'un circuit de refroidissement 28 agencé pour permettre notamment l'écoulement d'un liquide de refroidissement, en l'occurrence de l'huile, entre le carter 14 et le corps 23 du stator 11, dans la direction de l'axe X. A cet effet, le circuit de refroidissement 28 comporte une pompe 29 permettant d'acheminer l'huile, dans une chambre de distribution 30 ménagée dans le carter 14, laquelle permet de faire circuler l'huile à l'intérieur de rainures 31 s'étendant axialement le long du stator 11 et répartis angulairement de manière régulière sur la circonférence du stator 11.

L'huile circule également dans un alésage axial 32 réalisé dans l'arbre 13 du rotor 12 et dans des conduits 33 issus dudit alésage 32 ayant une orientation radiale et débouchant vers les deux faces d'extrémité axiale 36 du rotor 12.

Une telle configuration permet ainsi d'acheminer le liquide de refroidissement vers les deux faces d'extrémité axiale 36 du rotor 12. Le circuit de refroidissement 28 fonctionne en boucle fermée, de telle façon que l'huile est prélevée par la pompe 29 dans un réservoir 39 et est récupérée après circulation dans la machine 10 dans ce réservoir 39.

En outre, le rotor 12 comporte deux flasques 41 plaqués chacun contre une face d'extrémité axiale 36 du rotor 12. Ces flasques 41 assurent une retenue axiale des aimants 22 à l'intérieur des cavités 21 et servent également à équilibrer le rotor. Chaque flasque 41 pourra être muni avantageusement d'au moins un organe de projection 43, constitué par une pale, agencé pour projeter par centrifugation le liquide de refroidissement arrivant sur la face d'extrémité 36 correspondante vers les chignons 25 du bobinage 24.

Comme on peut le voir sur la figure 2, un carter 46 de la boîte de vitesses 16 constitue une enceinte remplie au moins en partie d'un liquide, en l'occurrence de l'huile utilisé pour la lubrification des différents composants mécaniques de la boîte de vitesses 16 et pour réaliser le refroidissement de la machine électrique 10, comme cela a été décrit précédemment. L'enceinte 46 comporte une ouverture 49 pour faire communiquer l'intérieur de l'enceinte 46 avec l'extérieur de l'enceinte 46.

La machine électrique 10 disposée à l'intérieur de l'enceinte 46 comporte une roue dentée (non représentée) montée sur l'arbre 13 destinée à coopérer avec une roue dentée correspondante de la boîte de vitesses 16.

Un élément de connecteur 51 connecté électriquement à la machine 10 est monté dans l'ouverture 49 de l'enceinte 46 de manière étanche, de sorte que l'élément de connecteur 51 participe à l'étanchéité permettant d'empêcher du liquide de s'écouler de l'intérieur vers l'extérieur de l'enceinte 46 par l'ouverture 49.

En l'occurrence, l'élément de connecteur 51 fixé sur une face externe du carter 14 de la machine 10 est destiné à être connecté électriquement avec un élément de connecteur 52 complémentaire de type femelle appartenant au module électrique de commande 55 positionné à l'extérieur de l'enceinte 46. Dans la suite de la description, on entend par élément de connecteur "mâle ou femelle" 51, 52, la forme globale du connecteur 51, 52 indépendamment du type femelle ou mâle des bornes électriques 61, 62 intégrées dans ce connecteur et décrites plus en détails ci-après.

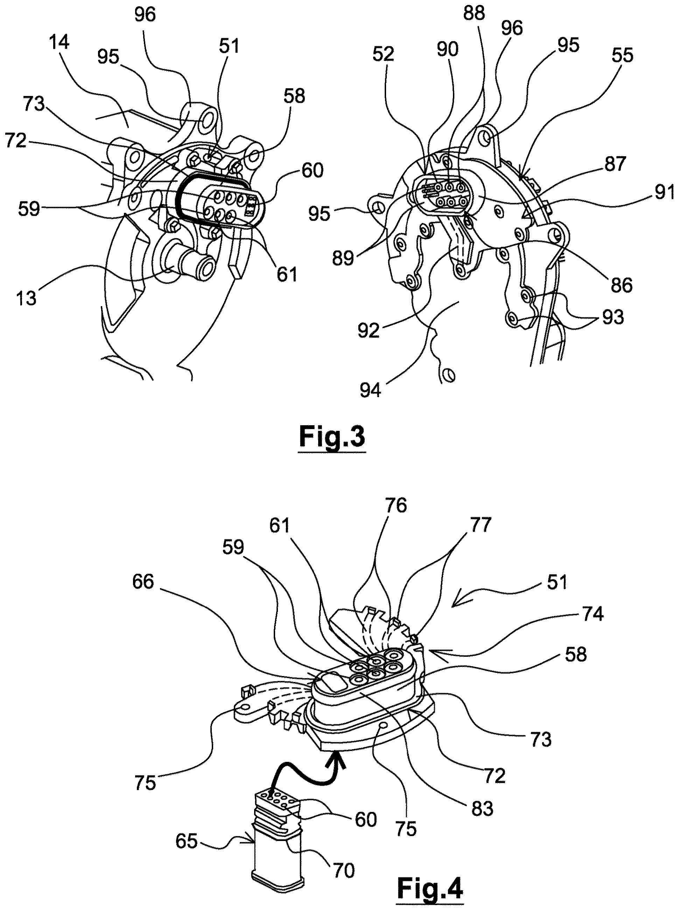

Comme cela est illustré sur la figure 4, l'élément de connecteur 51 comporte une partie 58 s'étendant en saillie par rapport à la face externe du carter 14 de la machine 10 muni d'une pluralité d'orifices 59, 60 agencés pour autoriser le passage de bornes électriques 61, 62 aptes à véhiculer des signaux électriques.

Les orifices de passage 59 sont réalisés directement dans la partie en saillie 58. En effet, l'élément de connecteur 51 comporte deux séries d'orifices 59 placées côte à côte et légèrement décalées l'une par rapport à l'autre. Ces orifices 59 au nombre de six (trois dans chaque série) autorise le passage des bornes 61 véhiculant les signaux de puissance haute tension des entrées et des sorties de phase de la machine 10.

Les autres orifices 60 sont réalisés dans un sous-connecteur 65 pour autoriser le passage des bornes 62 (cf. figure 5) véhiculant les signaux de commande basse tension, tels que des signaux relatifs à la position angulaire du rotor issus par exemple d'un capteur à effet Hall ou de signaux de température issus par exemple d'un capteur intégré au stator de la machine 10. Le sous-connecteur 65 rapporté est destiné à s'insérer à l'intérieur d'une cavité 66 ménagé dans la partie en saillie 58 du connecteur. La fixation du sous-connecteur 65 avec la partie 58 pourra être réalisée par exemple par encliquetage ou par collage.

Dans tous les cas, les orifices de passage 59, 60 reçoivent des joints 69 bien visibles sur la figure 5 pour empêcher du liquide de s'écouler de l'intérieur de l'enceinte 46 vers l'extérieur de l'enceinte 46 par l'ouverture 49. En outre, un joint 70 pourra également être positionné autour du sous-connecteur 65. En variante, les orifices 60 pour le passage des bornes 62 véhiculant les signaux de commande sont réalisés directement dans la partie en saillie 58, comme les orifices référencés 59.

L'élément de connecteur 51 comporte également un épaulement 72 sur une face duquel est monté en appui un joint intérieur 73 destiné à être positionné à l'intérieur de l'enceinte 46. Le joint 73 est ici un joint torique de forme allongée.

En outre, une base 74 s'étend autour de l'épaulement 72. La base 74 comporte des trous 75 pour autoriser le passage de moyens de fixation de l'élément de connecteur 51 sur la face externe du carter 14. La base 74 est munie de traces 76 agencées pour permettre le contact électrique entre les bornes 61 de l'élément de connecteur 51 et les entrées et les sorties de phase de la machine 10. Les entrées et les sorties de phase pourront à cet effet être reliées électriquement par soudage aux extrémités 77 des traces 76 dépassant par rapport à la périphérie externe de la base 74. De préférence, la base 74 est surmoulée sur les traces 76 en sorte que les traces 76 sont noyées dans la masse plastique de l'élément de connecteur 51. La base 74 et les traces 76 s'étendent dans un plan perpendiculaire à l'orientation des bornes électriques 61, 62. La base 74 et les traces 76 sont destinées à se situer à l'intérieur de l'enceinte 46.

Alors que les entrées et les sorties de phases sont espacées les unes des autres suivant la circonférence du stator, une telle configuration permet, grâce au chemin des traces 76, de regrouper localement dans l'élément de connecteur 51 les entrées et les sorties de phase déportées afin de faire passer les signaux électrique par l'ouverture réduite 49. En variante, dans le mode de réalisation de la figure 3, l'élément de connecteur 51 est dépourvu de base 74. Le bobinage du stator 11 est alors effectué en sorte que les entrées et les sorties de phase se situent derrière l'élément de connecteur 51 afin de pouvoir réaliser directement les connexions avec les bornes 61.

Lorsque la machine électrique 10 est positionnée à l'intérieur de l'enceinte 46, le joint intérieur 73 vient en appui contre une face d'appui intérieure 80 de l'enceinte 46 de manière à être écrasé entre la face intérieure 80 de l'enceinte 46 et l'épaulement 72. Le joint 73 empêche ainsi le liquide de s'écouler de l'intérieur vers l'extérieur de l'enceinte 46 par l'ouverture 49.

En l'occurrence, le joint intérieur 73 ainsi que l'épaulement 72 sont situés à l'intérieur de l'enceinte 46. En variante, le joint 73 et l'épaulement 72 sont positionnés à l'extérieur de l'enceinte 46, en sorte que le joint 73 est alors écrasé entre une face externe de l'enceinte 46 et l'épaulement 72. Dans les deux cas, le joint intérieur 73 fait le tour de l'ouverture 49 qui présente une forme oblongue.

En outre, un joint externe 83 est positionné autour de la partie en saillie 58. Ce joint externe 83 est apte à empêcher des impuretés de s'écouler de l'extérieur de l'enceinte 46 vers l'élément de connecteur 51, lorsque l'élément de connecteur 51 coopère avec l'élément de connecteur 52 complémentaire.

Par ailleurs, l'élément de connecteur 52 de type femelle comporte une partie évidée 86 délimitée par une paroi 87 apte à recevoir la partie en saillie 58 de l'élément de connecteur mâle 51.

L'élément de connecteur femelle 52 comporte des bornes 88 reliées à des éléments de commutation du module de commande 55 et destinées à coopérer avec les bornes de puissance 61 de l'élément de connecteur mâle 51. Les bornes 88 sont en l'occurrence montées dans des portions tubulaires 90 positionnées à l'intérieur de la partie évidée 86.

L'élément de connecteur 52 comporte également des bornes électriques 89 reliées à une unité de commande et destinées à coopérer avec les bornes 62 de l'élément de connecteur 51 véhiculant les signaux de commande.

A cet effet, l'élément de connecteur 52 comporte une base 91 munie de traces 92 agencées pour permettre le contact électrique entre les bornes électriques 88 et les éléments de commutation du module 55. Les traces 92 pourront également permettre le contact électrique entre les bornes électriques 89 et l'unité de commande. De préférence, la base 91 est surmoulée sur les traces 92.

L'élément de connecteur 52 comporte également des trous 93 pour autoriser le passage de moyens de fixation de l'élément de connecteur 52 sur une face 94 du module de commande 55 tournée vers la boîte de vitesses 16.

Les bornes de type mâle ou femelle pourront indifféremment être positionnées du côté de l'élément de connecteur mâle 51 ou femelle 52, l'autre élément de connecteur 51, 52 comportant alors des bornes de forme complémentaire.

Par ailleurs, il est à noter que lorsque les deux éléments de connecteur 51, 52 coopèrent entre eux, le joint externe 83 est écrasé entre la périphérie externe de la partie en saillie 58 de l'élément de connecteur mâle 51 et la face interne de la paroi 87 de l'élément de connecteur femelle 52. Le joint externe 83 permet ainsi d'éviter que des impuretés puissent s'introduire à l'intérieur des éléments de connecteur 51, 52. En variante, le joint 83 est fixé sur la périphérie interne de la paroi 87.

En outre, il serait possible d'intervertir l'utilisation des éléments de connecteur 51, 52 en positionnant l'élément de connecteur 52 de type femelle du côté de la machine électrique 10 et l'élément de connecteur 51 de type mâle du côté du module de commande 55.

L'assemblage mécanique entre le carter 14 de la machine électrique 10, et le module électrique de commande 55 pourra être réalisé au moyen de tirants (non représentés) destinés à passer à l'intérieur d'ouvertures 95 ménagées à l'intérieur d'oreilles 96 saillantes issues du carter 14 et du boîtier du module 55.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Ensemble, notamment pour véhicule hybride, comportant:
- une enceinte (46) pouvant accueillir un liquide de refroidissement et comportant une ouverture (49) pour faire communiquer l'intérieur de ladite enceinte (46) avec l'extérieur de ladite enceinte (46),
- une machine électrique tournante (10) disposée dans ladite enceinte (46) apte à être refroidie par ledit liquide de refroidissement,
- un élément de connecteur (51) électrique agencé pour être connecté électriquement à ladite machine électrique tournante (10), la machine (10) électrique comportant un stator (11) polyphasé entourant un rotor (12) d'axe X monté sur un arbre (13), le stator (11) est porté par un carter (14) configuré pour porter à rotation l'arbre (13) via des roulements,
- ledit élément de connecteur (51) étant monté dans ladite ouverture (49) de ladite enceinte (46) de manière étanche de sorte que ledit élément de connecteur (51) participe à l'étanchéité permettant d'empêcher du liquide de s'écouler de l'intérieur de ladite enceinte (46) vers l'extérieur de ladite enceinte (46) par ladite ouverture (49)
**caractérisé** :
- **en ce que** ledit élément de connecteur (51) comporte une pluralité d'orifices de passage (59, 60) pour des bornes électriques et,
- **en ce qu'**au moins une partie des orifices de passage sont en outre réalisés dans un sous-connecteur (65) rapporté.

2. Ensemble selon la revendication précédente, **caractérisé en ce qu'**un joint (70) est positionné autour du sous-connecteur (65).

3. Ensemble selon l'une quelconque des revendications 1 et 2, **caractérisé en ce que** lesdits orifices de passage (59, 60) reçoivent des joints (69) pour empêcher du liquide de s'écouler de l'intérieur de ladite enceinte (46) vers l'extérieur de ladite enceinte (46) par ladite ouverture (49).

4. Ensemble selon la revendication précédente, **caractérisé en ce que** l'élément de connecteur (51) comprend au moins une gorge entourant une des bornes électriques (61, 62), la gorge étant agencée pour recevoir le joint (69) disposé autour de la borne électrique (61, 62) correspondante.

5. Ensemble selon l'une quelconque des revendications précédentes, **caractérisé** :
- **en ce que** les orifices de passage (59, 60) comportant des bornes électriques (62) aptes à véhiculer des signaux de commande et des bornes électriques (61) aptes à véhiculer des signaux de puissance, et
- **en ce que** la partie des orifices de passage (60) réalisés dans le sous-connecteur (65) autorise le passage des bornes (62) véhiculant les signaux de commande basse tension sont réalisés dans le sous-connecteur (65).

6. Ensemble selon la revendication précédente, **caractérisé en ce que** l'élément de connecteur (51) comporte une partie (58) s'étendant en saillie par rapport à la face externe du carter (14) de la machine (10) muni de la pluralité d'orifices (59, 60) agencés pour autoriser le passage de bornes électriques (61, 62) aptes à véhiculer des signaux électriques, et
- **en ce que** les orifices de passage (59), au nombre de six, autorisant le passage des bornes (61) véhiculant les signaux de puissance haute tension des entrées et des sorties de phase de la machine (10), sont réalisés directement dans la partie en saillie (58).

7. Ensemble selon la revendication précédente, **caractérisé en ce que** le sous-connecteur (65) rapporté est destiné à s'insérer à l'intérieur d'une cavité (66) ménagé dans la partie en saillie (58) de l'élément de connecteur (51).

8. Ensemble selon l'une quelconque des revendications 6 et 7, **caractérisé en ce que** la fixation du sous-connecteur (65) avec la partie (58) de l'élément de connecteur (51) est réalisée par encliquetage.

9. Ensemble selon l'une quelconque des revendications précédentes, **caractérisé en ce que** ledit élément de connecteur (51) comporte un joint intérieur (73), ledit joint intérieur (73) étant agencé pour empêcher du liquide de s'écouler de l'intérieur de ladite enceinte (46) vers l'extérieur de ladite enceinte (46) par ladite ouverture (49) et **en ce que** ledit joint intérieur (73) est en appui contre une face d'appui (80) intérieure de ladite enceinte (46).

10. Ensemble selon la revendication précédente, **caractérisé en ce que** ledit joint intérieur (73), notamment torique de forme allongée, fait le tour de ladite ouverture (49), qui présente notamment une forme oblongue.

11. Ensemble selon l'une quelconque des revendications 9 et 10, **caractérisé en ce que** ledit élément de connecteur (51) comporte un épaulement (72) sur lequel est en appui ledit joint intérieur (73) en sorte que ledit joint intérieur (73) est écrasé entre ladite face d'appui (80) de ladite enceinte (46) et ledit épaulement (72).

12. Ensemble selon l'une quelconque des revendications précédentes, **caractérisé en ce que** l'élément de connecteur (51) est fixé sur une face externe du carter (14) de la machine (10).

13. Ensemble selon l'une quelconque des revendications précédentes, **caractérisé en ce que** ledit ensemble comporte un module électrique de commande (55) comportant un élément de connecteur (52) complémentaire destiné à être connecté électriquement audit élément de connecteur (51), ledit module électrique de commande (55) étant situé à l'extérieur de l'enceinte, le module électrique de commande (55) comportant un onduleur.

14. Ensemble selon la revendication précédente, **caractérisé** :
- **en ce que** ledit élément de connecteur (51) comporte un joint externe (83) apte à empêcher des impuretés de s'écouler de l'extérieur de ladite enceinte (46) vers ledit élément de connecteur (51), lorsque ledit élément de connecteur (51) coopère avec un élément de connecteur (52) complémentaire, et
- **en ce que** le joint externe (83) est positionné autour de la partie en saillie (58).

15. Ensemble selon l'une quelconque des revendications précédentes, **caractérisé en ce que** l'enceinte (46) est constituée par un carter de la boîte de vitesses et ce que la machine (10) comporte une roue dentée montée sur l'arbre (13) destinée à coopérer avec une roue dentée correspondante de la boîte de vitesses (16).
